(19) Europäisches Patentamt
European Patent Office
Office européen des brevets

(11) Veröffentlichungsnummer: **0 256 231 B1**

(12) **EUROPÄISCHE PATENTSCHRIFT**

(45) Veröffentlichungstag der Patentschrift: **16.01.91**

(51) Int. Cl.⁵: **H 02 M 3/156, H 02 M 3/155**

(21) Anmeldenummer: **87107910.9**

(22) Anmeldetag: **01.06.87**

(54) Steuerschaltung für ein Schaltnetzteil mit sinusförmiger Stromaufnahme zum Umwandeln einer sinusförmigen Wechselspannung in eine geregelte Gleichspannung.

(30) Priorität: **13.08.86 DE 3627395**

(43) Veröffentlichungstag der Anmeldung:
**24.02.88 Patentblatt 88/08**

(45) Bekanntmachung des Hinweises auf die Patenterteilung:
**16.01.91 Patentblatt 91/03**

(84) Benannte Vertragsstaaten:
**AT BE CH DE FR GB IT LI NL SE**

(56) Entgegenhaltungen:
**EP-A-0 059 053**
**DE-A-3 445 501**

**SIEMENS COMPONENTS, Band 21, Nr. 3, Juni 1986, Seiten 103-107, Berlin, DE; M. HERFURTH: "TDA 4814 - integrated circuit for sinusoidal line current consumption"**

(73) Patentinhaber: **Patent-Treuhand-Gesellschaft für elektrische Glühlampen mbH**
**Hellabrunner Strasse 1**
**D-8000 München 90 (DE)**

(72) Erfinder: **Bernitz, Franz**
**Ferdinand-Lassalle-Strasse 9**
**D-8025 Unterhaching (DE)**
Erfinder: **Statnic, Eugen**
**Ravensburger Ring 58**
**D-8000 München 60 (DE)**
Erfinder: **Hansmann, Frank**
**Im Landerfeld 6**
**D-3252 Bad Münder 2 (DE)**

(74) Vertreter: **Eisenführ, Speiser & Strasse**
**Zweibrückenstrasse 17**
**D-8000 München 2 (DE)**

**Beschreibung**

Die Erfindung betrifft eine Steuerschaltung für ein Schaltnetzteil mit sinusförmiger Stromaufnahme zum Umwandeln einer sinusförmigen Wechselspannung in eine geregelte Gleichspannung, wobei über einen Gleichrichter eine sinusförmige Gleichspannung erzeugt wird, die über einen elektronischen Schalter mit ihrem Strom eine Induktivität auflädt und die Induktivität sich dann über eine Diode auf einen Ausgangskondensator entlädt, und der elektronische Schalter von einem Steuerelement gesteuert wird, das den elektronischen Schalter für eine Einschaltzeit einschaltet, die vom Entladezustand der Induktivität, der augenblicklichen gleichgerichteten Spannung am Gleichrichter und der am Ausgangskondensator anliegenden Ausgangsgleichspannung abhängig ist.

Die Steuerschaltung ist insbesondere bestimmt zum Steuern aktiver Oberwellenfilter in Netzgleichrichterschaltungen. Mit derartigen Oberwellenfiltern kann aus dem Stromversorgungsnetz ein oberwellenarmer nahezu sinusförmiger Strom entnommen werden, wobei der Leistungsfaktor fast 1 beträgt und am Ausgang eine geregelte Gleichspannung zur Verfügung steht.

Aus der Zeitschrift "Siemens Components", Band 21, Heft 3, Juni 1986, Seiten 103 bis 107, ist ein derartiges Oberwellenfilter bekannt, das im wesentlichen aus einem Netzgleichrichter mit vorgeschaltetem Funkentstörfilter sowie nachgeschaltetem Schaltnetzteil besteht. Dieses arbeitet in der vorliegenden Anwendung als Hochsetzsteller mit kleiner Eingangskapazität.

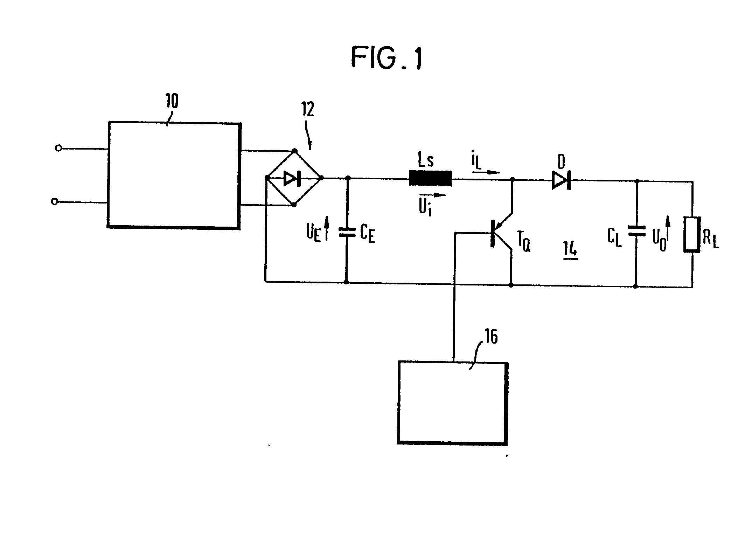

Figur 1 zeigt ein prinzipielles Schaltbild eines bekannten Oberwellenfilters, das als Hochsetzsteller ausgeführt ist. Die Ausgangsspannung $U_E$ des Netzgleichrichters liegt am Eingangskondensator $C_E$ des Schaltnetzteiles an. Der Kondensator $C_E$ liegt einerseits an Masse und ist andererseits über eine Drossel $L_s$ und eine Diode D mit dem einen Anschluß eines Ausgangskondensators $C_L$ verbunden, über dem die geregelte Ausgangsspannung $U_o$ anliegt, die den Verbraucher $R_L$ speist. Ein Transistor $T_Q$ überbrückt den der Drossel $L_s$ nachgeschalteten Schaltungsteil, wenn er von der Steuerschaltung durchgeschaltet wird. Eine derartige Schaltung arbeitet bekanntlich als Hochsetzsteller, bei dem die minimale Ausgangsgleichspannung $U_o$ geringfügig über dem Spitzenwert der Netzspannung liegt.

Die Steuerschaltung hat die Aufgabe, den Transistor $T_Q$ so zu steuern, daß eingangsseitig die Stromaufnahme möglichst sinusförmig erfolgt und ausgangsseitig eine Ausgangsspannung $U_o$, ein Ausgangsstrom $I_o$ beziehungsweise eine Ausgangsleistung $P_o$ unabhängig von Netz- und Lastschwankungen geregelt zur Verfügung steht. In der Drossel $L_s$ dürfen keine Stromlücken auftreten, weil sonst der Netzstrom nicht mehr sinusförmig wäre. Dies setzt voraus, daß die Einschaltung des Transistors $T_Q$ erst bei entladener Drossel $L_s$ beginnt. Bei der bekannten Schaltungsanordnung wird deshalb über einer Sekundärwicklung an der Drossel diese Situation abgefühlt. Erfolgt somit die Einschaltung des Transistors $T_Q$ erst bei entladener Drossel $L_s$, dann ergibt sich bei konstanter Einschaltzeit ein Netzstrom, der proportional zur Netzspannung ist, also im Normalfall sinusförmig verläuft. Zur Regelung der Ausgangsspannung $U_o$ (bzw. $I_o$ oder $P_o$) wird die Einschaltdauer $t_1$ des Transistors $T_Q$ und damit die Aufladezeit der Drossel $L_s$ verwendet, da die Ausschaltzeit $t_2$ nur durch die vollständige Entladung der Drossel bestimmbar ist.

Bei der bekannten Steuerschaltung wird die Einschaltdauer $t_1$ des Transistors durch eine verhältnismäßig komplizierte Schaltung gesteuert, der die Information über die augenblickliche Eingangsspannung $U_E$, die augenblickliche Ausgangsspannung $U_o$ und der augenblicklich durch den Transistor fließenden Strom zugeführt werden. Außerdem liegt an der Schaltung ein von einer Sekundärwicklung auf der Drossel abgeleitetes Signal zur Anzeige der vollständigen Entladung der Drossel. Die bekannte Schaltungsanordnung umfaßt einen ersten Regelverstärker, in dem die Ist-Ausgangsspannung mit der Soll-Ausgangsspannung verglichen wird, einen Multiplizierer, dem der Ausgangsdifferenzwert des ersten Regelverstärkers und die augenblickliche Eingangsspannung zugeführt wird, einen zweiten Regelverstärker, der den Ist-Strom durch den Transistor mit dem Ausgangssignal des Multiplizierers und dessen Ausgangssignal eine Treiberstufe steuert, die als Steuerelement zum Schalten des Transistors dient und in der neben einem Verstärker eine bistabile Kippschaltung und mehrere Verknüpfungsglieder angeordnet sind. Neben der Kompliziertheit der bekannten Steuerschaltung besteht bei dieser das Problem, daß über die Sekundärwicklung der Drossel der exakte Zeitpunkt der vollständigen Entladung der Drossel und somit der Durchschaltung des Transistors nur ungenau bestimmt werden kann. Wird der Transistor $T_Q$ zu früh durchgeschaltet, dann besteht die Gefahr, daß bedingt durch die Rückwärtserholzeit der Diode D ein Kurzschlußstrom aus dem Ausgangskondensator $C_L$ durch den Transistor fließt, der zur Überlastung oder Zerstörung des Transistors und/ oder der Diode führen kann. Auch verringert sich der Wirkungsgrad des Hochsetzstellers. Ist andererseits die Ausschaltzeit $t_2$ länger als die Entladezeit der Drossel $L_s$, dann treten bedingt durch die Streuinduktivität von $L_s$ und parasitären Kapazitäten des Transistors, der Wicklung und der Diode unerwünschte Schwingungen auf, die den Wirkungsgrad der Schaltungsanordnung herabsetzen. Außerdem entstehen unerwünschte Stromlücken, die zu einer Verzerrung der Sinusform führen.

Der Erfindung liegt die Aufgabe zugrunde, eine Steuerschaltung für das eingangs genannte Schaltnetzteil anzugeben, die bei vereinfachtem Aufbau in ihrer Funktion verbessert ist.

Diese Aufgabe wird erfindungsgemäß dadurch gelöst, daß das Steuerelement aus einem ersten Schwellwertschalter besteht, an dessen Eingang ein Kondensator geschaltet ist, dessen Umladezeit auf die obere Hysterese-Schwellspannung des ersten Schwellwertschalters der Einschaltzeit entspricht, und daß ein Verbindungspunkt zwischen Induktivität, Diode und elektronischem Schalter über ein RC-Glied an den Eingang eines zweiten Schwellwertschalters geschaltet ist, der nach einem bei vollständiger Entladung der Induktivität auftretenden Spannungssprung den mit dem ersten Schwellwertschalter verbundenen Kondensator entlädt, wobei die Umladezeit des Kondensators und damit die Einschaltzeit des elektronischen Schalters bestimmt wird durch Summierung mehrerer Ströme, deren Größe bestimmt ist durch eine Bezugsspannung, den Augenblickswert der gleichgerichteten Spannung und den Augenblickswert der Ausgangsgleichspannung.

Durch die Anordnung eines Schwellwertschalters zur Steuerung des Transistors in Verbindung mit einer exakten direkten Abfühlung des Spannungszustandes am Verbindungspunkt zwischen der Induktivität und der Diode kann der optimale Einschaltpunkt des Transistors einfach und sicher eingehalten werden.

Bevorzugte Weiterbildungen der erfindungsgemäßen Steuerschaltung sind in den Unteransprüchen gekennzeichnet.

Weitere Merkmale und Vorteile der erfindungsgemäßen Steuerschaltung ergeben sich aus der nachfolgenden Beschreibung eines Ausführungsbeispiels anhand der Zeichnung. Es zeigen

Figur 1 ein Schaltbild eines bekannten Oberwellenfilters,

Figur 2 ein Schaltbild des Ausführungsbeispiels der erfindungsgemäßen Steuerschaltung im Einsatz bei einem aktiven Oberwellenfilter und

Figur 3 Signalformen zur Erläuterung der Arbeitsweise der erfindungsgemäßen Steuerschaltung.

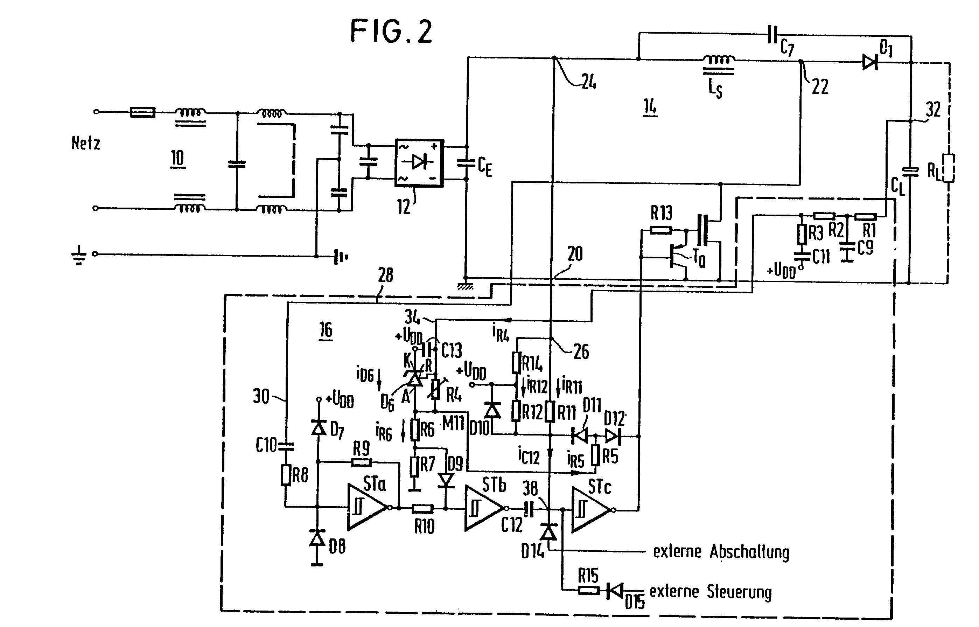

Figur 2 zeigt ein an das Netz angeschlossenes Funkentstörfilter 10, ein Netzgleichrichter 12, einen Hochsetzsteller 14 und eine erfindungsgemäße Steuerschaltung 16.

Das Funkentstörfilter 10 und der Netzgleichrichter 12 sind bekannt und werden nicht näher beschrieben. Am Ausgang des Netzgleichrichters 12 liegt an einem relativ kleinen Kondensator $C_E$ die gleichgerichtete Eingangsspannung $U_E$ in Form von positiven Sinushalbwellen am Hochsetzsteller 14 an. Während der negative Anschluß des Kondensators $C_E$ mit der gemeinsamen (Masse-) Leitung 20 verbunden ist, liegt an seinem oberen Anschluß die Drossel $L_s$ an, die andererseits über eine Diode $D_1$ mit dem positiven Anschluß des Ausgangskondensators $C_L$ verbunden ist, der ein Elektrolytkondensator mit wesentlich höherer Kapazität als der Eingangskondensator $C_E$ ist und an dem die geregelte Ausgangsspannung $U_O$ ansteht, die zur Speisung eines Verbrauchers $R_L$, insbesondere eines elektrischen Vorschaltgeräts für Leuchtstofflampen oder andere Verbraucher, wie Fernsehgeräte oder dergleichen dient. Der Transistor $T_Q$ liegt mit seiner gesteuerten Strecke zwischen einem Verbindungspunkt 22 der Drossel L mit der Diode $D_1$

und Masse, während sein Steuereingang über einen Widerstand R13 das Ausgangssignal der Steuerschaltung 16 empfängt. Die augenblickliche Eingangsspannung $U_E$ wird an einem Verbindungspunkt 24 zwischen dem positiven Anschluß des Kondensators $C_E$ und der Drossel $L_s$ abgegriffen und der Steuerschaltung 16 an einem Verbindungspunkt 26 zugeführt, eine Leitung 28 legt ferner die Spannung an dem Verbindungspunkt 22 an einen Eingang 30 der Steuerschaltung 16.

An einem Verbindungspunkt 32 zwischen der Diode $D_1$ und dem Kondensator $C_L$ wird die Ausgangsspannung $U_O$ abgegriffen und über in Reihe geschaltete Widerstände R1 und R2 einem Eingang 34 der Steuerschaltung 16 zugeführt.

Die Steuerschaltung 16 enthält als wichtigsten Baustein einen Schmitt-Trigger STc der als Schwellwertschalter zum Steuern des Transistors $T_Q$ dient und der die Einschaltzeit des Transistors $T_Q$ und damit die Ladezeit der Drossel $L_s$ abhängig von der Ladung eines an seinem Eingang angeordneten Kondensators C12 steuert. Die Einschaltdauer des Transistors $T_Q$ wird direkt bestimmt durch die Umladezeit des Kondensators C12 auf die obere Hysterese-Schwellspannung des Schmitt-Triggers STc.

Diese Umladezeit des Kondensators C12 wird bestimmt durch den Strom $iC_{12}$, der wiederum von drei Faktoren bestimmt wird:

a) Durch den Strom durch einen Widerstand R12 der einerseits mit einer positiven Bezugsspannung $+U_{DD}$, zum Beispiel 12 Volt, und andererseits mit dem Verbindungspunkt 38 zwischen dem Kondensator C12 und dem Eingang des Schmitt-Triggers STc verbunden ist. Dieser Grundstrom allein würde zur einer konstanten Umladezeit für den Kondensator C12 führen und somit zu einer konstanten Einschaltzeit des Transistor $T_Q$.

b) Durch einen Strom durch einen zwischen den Verbindungspunkt 24 und den Verbindungspunkt 38 gelegten Widerstand R11, der einen Strom proportional zur augenblicklichen, von der augenblicklichen Netzspannung abhängenden Eingangsspannung $U_E$ bewirkt und der sich zu dem Strom durch den Widerstand R12 addiert, wobei bei steigender augenblicklicher Eingangsspannung $U_E$ die Umladezeit des Kondensators C12 verkürzt wird;

c) Durch die am Verbindungspunkt 32 über die Widerstände R1, R2, abgegriffene Spannung $U_O$ die über ein noch zu beschreibendes Bezugsspannungsnetzwerk einen Strom $i_{R4}$, der an dem Widerstand R4 einen Spannungsabfall zur Steuerung der Diode D6 bewirkt. Hierdurch ändern sich die Ströme $i_{R6}$ und folglich $i_{R5}$. Hierdurch wird die Umladezeit des Kondensators C12 abhängig von der augenblicklichen Ausgangsspannung $U_O$ verkürzt und damit der Wert des Ausgangsspannung $U_O$ geregelt.

Ferner ergibt sich, daß sich eine maximale Einschaltzeit $t_{1max}$ dann ergibt, wenn die Eingangsspannung $U_E$ gegen O geht. Damit ist eine untere Betriebsfrequenz des Hochsetzstellers vorgegeben, wobei der Widerstand R12 proportional

zur Einschaltzeit $t_1$ ist. Diese untere Betriebsfrequenz sollte nicht im menschlichen Hörbereich liegen.

Der Strom $i_{R11}$ verändert die durch $i_{R12}$ vorgegebene Einschaltzeit $t_1$ in Abhängigkeit von der augenblicklichen Eingangsspannung $U_E$ (bzw. der augenblicklichen Netzspannung $U_N$) im Sinne einer Verkürzung der Einschaltzeit $t_1$. Der Netzstrom ist bei kleiner Einwirkung von $i_{R11}$, das heißt bei einen verhältnismäßig großen Widerstandwert von R11 annähernd sinusförmig, bei mittlerer Einwirkung etwa halbkreisförmig, was die Übergänge beim Nulldurchgang der Netzspannung verbessert, und bei grosser Einwirkung von R11 nahezu trapezförmig. Bei halbkreisförmiger bzw. trapezförmiger Netzstromaufnahme ergibt sich ein geringerer Maximalstrom durch den Transistor $T_Q$ bzw. die Diode $D_1$ und die Verluste werden geringer. Ein weiterer Vorteil ist die kleinere Brummwechselspannung am Ausgang des Hochsetzstellers 14.

Am Eingang 34 der Steuerschaltung 16, an dem die Ausgangsspannung $U_O$ anliegt, ist eine Bezugsspannungschaltung angeschlossen, die eine steuerbare Zenerdiode D6 enthält deren Kathode mit positiven Bezugspotential $+U_{DD}$ verbunden ist, während ihre Anode an den Widerstand R5 angeschlossen ist und über Spannungsteiler- Widerstände R6 und R7 an Masse liegt. Die Anode der Zenerdiode D6 ist ferner über einen veränderbaren Widerstand R4 an den Eingang 34 der Steuerschaltung 16 angeschlossen, der über einen Kondensator C13 auf positives Bezugspotential $+U_{DD}$ gelegt ist und mit dem Steuereingang R der steuerbaren Zenerdiode D6 in Verbindung steht. Bei steigender Ausgangsspannung $U_O$ steigt die Spannung zwischen der Anode und dem Steuereingang R, so daß der Strom $i_{D6}$ grösser wird und über den Widerstand R5 und die Diode D11 die Aufladezeit des Kondensators C12 verkürzt. Hierdurch wird die Ladezeit $t_1$ der Drossel $L_s$ kleiner und die Ausgangsspannung $U_O$ wird auf ihren Sollwert geregelt. Mittels des veränderbaren Widerstandes R4 kann der Sollwert der Ausgangsspannung $U_O$ auf unterschiedliche Werte eingestellt werden.

Von wesentlicher Bedeutung für die Erfindung ist die Bestimmung des Zeitpunktes, zu dem die Aufladung der Drossel $L_s$ nach ihrer Entladung wieder zu beginnen hat, also die Durchschaltung des Transistors $T_Q$. Wie eingangs erwähnt, ist Voraussetzung dafür, daß zuvor die Drossel $L_s$ vollständig entladen ist und die Rückwärtserholzeit der Diode $D_1$ nach Aussetzen der Entladung der Drossel $L_s$ abgeklungen ist. Hierzu wird die Spannung am Verbindungspunkt 22 zwischen der Drossel $L_s$ und der Diode $D_1$ abgegriffen und über eine Reihenschaltung aus einem Kondensator C10 und einem Widerstand R8 am Eingang 30 der Steuerschaltung 16 zugeführt. Nach Beendigung der Entladung der Drossel $L_s$ und nach entgültigem Sperren der Diode $D_1$ tritt am Verbindungspunkt 22 ein Spannungssprung von $U_O$ gegen O auf, der unmittelbar durch das RC-Glied C10, R8 über die Schmitt-Trigger STa, STb, und STc den Transistor $T_Q$ sofort einschaltet, so daß die Drossel $L_s$ solange geladen wird, bis die Spannung am Verbindungspunkt 38 aufgrund der Aufladung des Kondensators C12 wieder die obere Hysterese-Schwellspannung des Schmitt-Triggers STc erreicht, so daß dieser umgeschaltet wird und den Transistor $T_Q$ sperrt. Zum Erreichen der Startbedingungen beim Einschalten der Schaltungsanordnung ist die Steuerschaltung 16 mit einem weiteren Schmitt-Trigger STa ausgestattet, dessen Eingang an den freien Anschluß des Widerstandes R8 angeschlossen und durch Dioden D7 und D8 bezüglich der Eingangspannung zwischen Masse und $+U_{DD}$ geklemmt ist. Hierdurch wird die beim Spannungssprung sehr hohe Eingangsspannung am Widerstand R8 auf einen Wert geklemmt, der eine Zerstörung des Schmitt-Triggers STa vermeidet. Der Ausgang des Schmitt-Triggers STa ist über ein Widerstand R9 mit dem Eingang des Schmitt-Triggers STa und über einen Widerstand R10 mit dem Eingang eines weiteren Schmitt-Triggers STb verbunden, der als Inverter arbeitet und dessen Ausgang an dem einen Anschluß des Kondensators C12 liegt. Der Eingang des Schmitt-Triggers STb steht ferner über eine Diode D9 mit dem Verbindungspunkt des Spannungsteilers R6 und R7 in Verbindung.

Eine Diode D12 schließt den Verbindungspunkt zwischen dem Widerstand R 5 und der Diode D11 an den Ausgang des als Schwellwertschalter wirkenden Schmitt-Triggers STc an.

Falls bei hoher Netzspannung der Augenblickswert von $U_E$ in die Nähe der Ausgangsspannung $U_O$ kommt, wird über einen Kondensator $C_7$, der über die Drossel $L_s$ und über die Diode $D_1$ geschaltet ist, zusätzlich Energie vom Netz auf den Ausgangskondensator $C_L$ übertragen.

Die Widerstände R1 und R2 bilden mit einem an Masse angeschlossenen Kondensator C9 ein T-Glied und der andere Anschluß von R2 ist über einen Widerstand R3 und einen dazu in Reihe geschalteten Kondensator C11 an positive Bezugsspannung $+U_{DD}$ gelegt. Diese RC- Kombination eliminiert 100 Hz-Brummanteile aus dem Steuerstrom $i_{R4}$ durch den einstellbaren Widerstand R4 und verhindert außerdem eine Schwingneigung des Systems. C11 wird deshalb auf $+U_{DD}$ gelegt, damit beim Starten der Strom $i_{R4}$ möglichst hoch ist und sich ein weicher Start, das heißt ein langsames Aufbauen der Ausgangsspannung $U_O$ am Ausgangskondensator $C_L$ ergibt.

Ein Widerstand R14 ist an den Verbindungspunkt 26 und an die positive Bezugsspannung $+U_{DD}$ gelegt und eine Diode D10 ist parallel zu den Widerstand R12 geschaltet. Ein externes Abschaltsignal kann über eine Diode D14 an den Verbindungspunkt 38 am Eingang des Schmitt-Triggers STc angelegt werden.

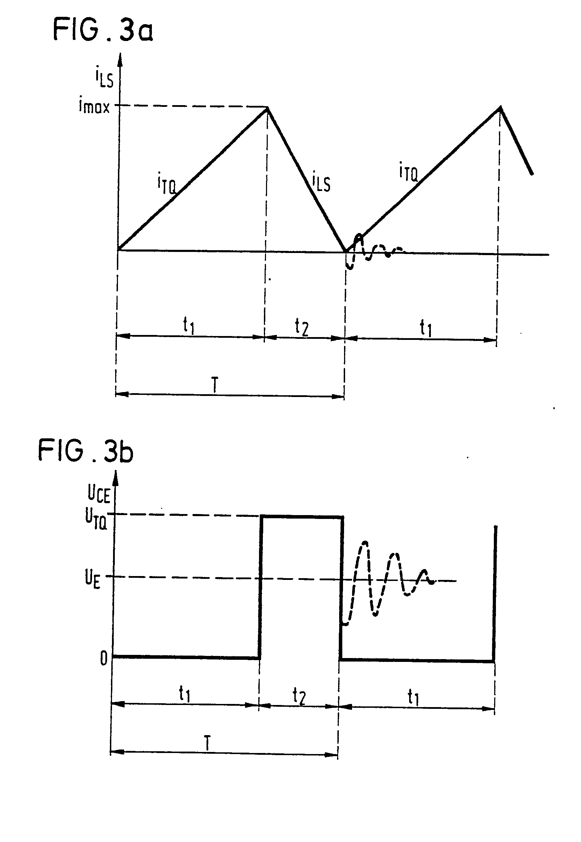

Nachfolgend wird die Arbeitsweise der erfindungsgemäßen Steuerschaltung gemäß Figur 2 unter Bezugnahme auf die Figuren 3 a und 3b näher erläutert:

Wird das Oberwellenfilter gemäß Figur 2 an Netzspannung gelegt, dann entwickelt sich über das Funkentstörfilter 10 und den Netzgleichrichter 12 an dessen Ausgang die Eingangsspannung $U_E$ zum Hochsetzsteller 14 in Form positiver Sinushalbwellen. Der durch die Drossel $L_S$ linear steigende Strom führt zu einer Energiespeicherung in der Drossel bis zur Sättigung, wobei die Aufladezeit $t_1$ durch die Steuerschaltung 16 bestimmt wird. Bei gesperrtem Transistor $T_Q$ entlädt sich die Drossel $L_S$ über die Diode $D_1$ und der Kondensator $C_L$ wird aufgeladen, so daß sich an ihm ein Ausgangsspannung $U_O$ aufbaut.

Wie bereits erwähnt, ist die Erfassung des Entladezustandes der Drossel $L_S$ wichtig, die über das Zeitglied C10, R8 erfolgt. Sobald der Strom durch die Diode $D_1$ auf O zurückgeht, springt die Spannung am Verbindungspunkt 22 von $U_O$ gegen O. Die Drossel $L_S$ versucht nun mit parasitären Kapazitäten eine gedämpfte Schwingung auszuführen. Diese wird durch das Zeitglied R8, C10 erfasst, wobei die erste fallende Flanke der Schwingung aufgrund der Klemmung durch die Diode $D_7$ und $D_8$ durch die positive Bezugsspannung $+U_{DD}$ an den Eingang des Schmitt-Triggers STa gelegt wird, dessen Eingang auf logisch O geschaltet wird. Der Ausgang des Schmitt-Triggers STa nimmt damit logisch 1 an und steuert über den Widerstand R10 den Eingang des Schmitt-Triggers STb auf logisch 1. Hiermit wechselt der Ausgang des Schmitt-Triggers STb von logisch 1 nach logisch O, wobei dieser Wechsel über den Kondensator C12 an den Eingang des als Schwellwertschalters arbeitenden Schmitt-Trigger STc übertragen wird, dessen Ausgang auf logisch 1 springt, wodurch der Transistor $T_Q$ eingeschaltet wird und die Aufladung der Drossel $L_S$ linear einsetzt. Der Strom $i_{TQ}$ erreicht nach der Zeit $t_1$ den Wert

$$i_{max} = \frac{U_E \times t_1}{L_S}$$

Dies bedeutet, daß der maximale Strom einmal von der augenblicklichen Eingangsspannung $U_E$ und zum anderen von der Aufladedauer der Drossel $L_S$ beziehungsweise der Einschaltzeit $t_1$ des Transistors $T_Q$ abhängt.

Die Durchlaufverzögerung durch jeden Schmitt-Trigger beträgt jeweils 50ns, wenn diese in CMOS Technik ausgeführt sind, und es ergibt sich somit eine Gesamtdurchlaufverzögerung von 150ns gegenüber einer minimalen Einschaltdauer $t_{1min}$ von unter einer µs. Beim Einsatz von Schmitt-Triggern in H-CMOS-Technologie beträgt die Verzögerung pro Einheit ca 10ns.

Wie bereits zuvor beschrieben, wird die Einschaltdauer des Transistors $T_Q$ und damit die Aufladezeit der Drossel $L_S$ direkt bestimmt durch die Umladezeit des Kondensators C12 auf die obere Hysterese-Schwellspannung des Schmitt-Triggers STc. Der Kondensator C12 ist entladen, wenn der Ausgang des Schmitt-Triggers STb auf logisch 1 steht. Die Aufladedauer $t_1$ hat dann einen maximalen Wert, wenn die Eingangsspannung $U_E$ gegen O geht und sie verkürzt sich bei steigender Eingangsspannung $U_E$ und einer über dem Sollwert liegenden Ausgangsspannung $U_O$.

Nach Ablauf der Einschaltzeit $t_1$, das heißt nach Umschaltung des Schmitt-Triggers STc und Sperren des Transistors $T_Q$ erfolgt die Entladung der Drossel $L_S$ über die Diode $D_1$ während der Entladezeit $t_2$, an deren Ende der Entladungszustand der Drossel $L_S$ festgestellt und ein neuer Aufladevorgang eingeleitet wird. Es ergibt sich somit eine freischwingende Schaltung, wobei sich die Frequenz der Schwingung abhängig von der Zeit $T = t_1 + t_2$ beispielsweise zwischen 20 und 100 kHz ändert.

Die Figuren 3a und 3b zeigen den Verlauf dieser Schwingung und zwar einmal gemäß Figur 3a den Verlauf des Stromes durch den Transistor $T_Q$ zur Aufladung der Drossel $L_S$ und des Entladestromes durch die Diode $D_1$. Figur 3b zeigt den Spannungsverlauf der Spannung $U_{TQ}$ am Verbindungspunkt 22 bzw. über den Transistor $T_Q$.

Die gestrichelt eingezeichnete gedämpft Schwingung würde im Moment der Entladung der Drossel $L_S$ und der Diode $D_1$ um den Momentanwert der gleichgerichteten Wechselspannung $U_E$ schwingen, wenn nicht bereits die erste Flanke dieser Schwingung am Eingang des Schmitt-Triggers STa abgetastet und zur Zustandsänderung der Steuerschaltung verwendet würde.

Durch die Umladung des Kondensators C12 und anschliessender Umschaltung des Ausgangs des Schmitt-Triggers STb würde eine Überspannung am Schmitt-Trigger STc von ca 5V also eine Spannung $+ U_{DD} + 5V$ entstehen, die jedoch über die Diode $D_{10}$ geklemmt wird. Bei Verwendung einer integrierten Schaltung mit interner Schutzbeschaltung kann die Diode $D_{10}$ entfallen, etwa wenn eine Schaltung Hex-Schmitt-Trigger 40106 verwendet wird. Durch die Diode $D_{10}$ wird außerdem sichergestellt daß bei schneller Impulsfolge, das heißt wenn die Drossel $L_S$ bei kleiner Netzspannung gleich wieder geladen wird, der Ausgang von STc sofort wieder auf "1" schalten kann.

Es sei darauf hingewiesen, daß ein übermässiges Ansteigen der Ausgangsspannung $U_O$ dadurch begrenzt wird, daß der Schmitt-Trigger STc inaktiviert wird und damit keine Aufladung der Drossel $L_S$ erfolgt, solange ein Überspannungszustand herrscht. Im Einzelnen dient die Zenerdiode D6 unter anderem als Überspannungsschutz: bei steigendem $i_{D6}$ durch die Zenerdiode steigt die Spannung am Verbindungspunkt zwischen den Widerständen R6 und R7 soweit an, daß über die Diode D9 die untere Hysterese-Schwellspannung am Eingang des Schmitt-Triggers STb nicht mehr unterschritten werden kann. Der Ausgang des Schmitt-Triggers STb bleibt dann auf logisch 1 solange $U_O$ einen durch den Widerstand R7 festsetzbaren Grenzwert überschreitet. Nach der Aufladung des Kondensators C12 auf die obere Hysterese-Schwellspannung am Eingang des Schmitt-Triggers STc bleibt der Transistor $T_Q$ gesperrt, bis die Überspannungssituation abgebaut ist. Dies ist unabhängig von der Anfangs-Schwingung des Schmitt-Triggers STa, der durch den Widerstand R10 vom Eingang des Schmitt-Triggers Stb entkoppelt ist.

Es sei darauf hingewiesen, daß der Widerstand R9 in Verbindung mit der Eingangskapazität des Schmitt-Triggers STa als Startgenerator bei der Einleitung der ersten Schwingung dient.

Vorstehend wurde eine Steuerschaltung für ein aktives Oberwellenfilter beschrieben, die einen sehr einfachen Aufbau und eine sichere Funktion besitzt. Insbesondere wird ein Schwellwertschalter, bevorzugt in Form eines Schmitt-Triggers, verwendet. Die drei Schmitt-Trigger des Ausführungsbeispiels sind bevorzugt in einem IC Baustein integriert und die Steuerschaltung ist nicht nur bei Hochsetztstellern sondern auch bei Tiefsetztstellern (Sperrwandler, Durchflußwandler) und Kombinationen daraus einsetzbar.

**Patentansprüche**

1. Steuerschaltung für ein Schaltnetzteil mit sinusförmiger Stromaufnahme zum Umwandeln einer sinusförmigen Wechselspannung in eine geregelte Gleichspannung, wobei über einen Gleichrichter (12) eine sinusförmige Gleichspannung erzeugt wird, die über einen elektronischen Schalter $(T_Q)$ mit ihrem Strom eine Induktivität $(L_S)$ auflädt und die Induktivität $(L_S)$ sich dann über eine Diode $(D_1)$ auf einen Ausgangskondensator $(C_L)$ entlädt, und der elektronische Schalter $(T_Q)$ von einem Steuerelement (STc) gesteuert wird, das den elektronischen Schalter $(T_Q)$ für eine Einschaltzeit einschaltet, die vom Entladezustand der Induktivität $(L_S)$, der augenblicklichen gleichgerichteten Spannung am Gleichrichter (12) und der am Ausgangskondensator $(C_L)$ anliegenden Ausgangsgleichspannung abhängig ist, dadurch gekennzeichnet, daß das Steuerelement aus einem ersten Schwellwertschalter (STc) besteht, an dessen Eingang ein Kondensator (C12) geschaltet ist, dessen Umladezeit auf die obere Hysterese-Schwellspannung des ersten Schwellwertschalters (STc) der Einschaltzeit entspricht, und daß ein Verbindungspunkt (22) zwischen Induktivität $(L_S)$, Diode (D1) und elektronischem Schalter $(T_Q)$ über ein RC-Glied (C10, R8) an den Eingang eines zweiten Schwellwertschalters (STa) geschaltet ist, der nach einem bei vollständiger Entladung der Induktivität $(L_S)$ auftretenden Spannungssprung den mit dem ersten Schwellwertschalter (STc) verbundenen Kondensator (C12) entlädt, wobei die Umladezeit des Kondensators (C12) und damit die Einschaltzeit des elektronischen Schalters $(T_Q)$ bestimmt wird durch Summierung mehrerer Ströme ($i_{R12}$, $i_{R11}$, $i_{R5}$), deren Größe bestimmt ist durch eine Bezugsspannung ($+U_{DD}$), den Augenblickswert der gleichgerichteten Spannung ($U_E$) und den Augenblickswert der Ausgangsgleichspannung ($U_o$).

2. Steuerschaltung nach Anspruch 1, dadurch gekennzeichnet, daß zwischen dem zweiten und ersten Schwellwertschalter (STa, STc) ein weiterer Schwellwertschalter (STb) geschaltet ist.

3. Steuerschaltung nach Anspruch 1 oder 2, dadurch gekennzeichnet, daß der erste, zweite und dritte Schwellwertschalter Schmitt-Trigger (STc, STa, STb) sind.

4. Steuerschaltung nach einem der vorhergehenden Ansprüche, dadurch gekennzeichnet, daß der zweite Schwellwertschalter (STa) durch einen Widerstand (R9) überbrückt ist, so daß er als Startgenerator arbeitet.

5. Steuerschaltung nach Ansprüche 3; dadurch gekennzeichnet, daß der erste, zweite und dritte Schwellwertschalter (STc, STa, STb) in Form einer integrierten Schaltung aufgebaut sind.

6. Steuerschaltung nach einem der vorhergehenden Ansprüche, dadurch gekennzeichnet, daß eine Überspannungsschutzschaltung (D6, R6, R7) vorgesehen ist, die bei Überschreiten eines vorgegebenen Grenzwertes durch die Ausgangsspannung ($U_o$) den ersten Schwellwertschalter (STc) solange inaktiviert, bis der Grenzwert wieder unterschritten ist.

7. Steuerschaltung nach einem der vorhergehenden Ansprüche, dadurch gekennzeichnet, daß der erste Schwellwertschalter (STc) durch ein externes Signal inaktivierbar ist.

8. Steuerschaltung nach Anspruch 6 oder 7, dadurch gekennzeichnet, daß die Überspannungsschutzschaltung eine steuerbare Zenerdiode (D6) und einen Spannungsteiler (R6, R7) aufweist, dessen mittlerer Punkt über eine Diode (D9) mit dem Eingang des Schwellwertschalters (STb) verbunden ist.

9. Steuerschaltung nach einem der vorhergehenden Ansprüche, dadurch gekennzeichnet, daß ein veränderbarer Widerstand (R4) zur Einstellung der Ausgangsspannung ($U_o$) zwischen den Verbindungspunkt der Diode (D1) und des Ausgangskondensators ($C_L$) und den Kondensator ($C_{12}$) geschaltet ist.

10. Steuerschaltung nach einem der vorhergehenden Ansprüche, dadurch gekennzeichnet, daß die Ausgangsspannung ($U_o$) am Kondensator ($C_L$) über eine RC-Kombination (Rl, R2, C9) abgegriffen und der Steuerschaltung zur Beeinflussung des Ladestromes für den Kondensator (C12) zugeführt wird.

11. Steuerschaltung nach einem der vorhergehenden Ansprüche, dadurch gekennzeichnet, daß die Induktivität ($L_S$) und die Diode ($D_1$) durch einen Kondensator ($C_7$) überbrückt sind.

12. Steuerschaltung nach einem der vorhergehenden Ansprüche, dadurch gekennzeichnet, daß der Eingang des zweiten Schwellwertschalters (STa) über Dioden ($D_7$, $D_8$) geschützt ist.

13. Steuerschaltung nach einem der vorhergehenden Ansprüche, dadurch gekennzeichnet, daß der Eingang des ersten Schwellwertschalters (STc) über eine Diode ($D_{10}$) geschützt ist.

14. Steuerschaltung nach Ansprüche 13, dadurch gekennzeichnet, daß durch Dioden ($D_{11}$, $D_{12}$) eine zeitrichtige Eingabe des Regelsignals der steuerbaren Zenerdiode ($D_6$) auf den Kondensator (C12) bewirkt wird.

15. Steuerschaltung nach Anspruche 14, dadurch gekennzeichnet, daß zur Unterdrückung von Störschwingungen die steuerbare Zenerdiode (D_6) durch einen Kondensator (C13) überbrückt ist.

16. Steuerschaltung nach einem der vorhergehenden Ansprüche 13-15, dadurch gekennzeichnet, daß über einen Widerstand (R14) zwischen dem Kondensator (C7) und der Diode (D_10) ein Anlauf der Schaltung bewirkt wird.

17. Steuerschaltung nach einem der vorhergehenden Anspruche 13-16, dadurch gekennzeichnet, daß über eine Diode (D_15) und einen Widerstand (R15) auf einen Punkt zwischen dem Kondensator (C12) und dem ersten Schwellwertschalter (STc) eine externe Steuerung vorgesehen sein kann.

**Revendications**

1. Circuit de commande pour une alimentation à découpage à courant d'entrée de forme sinusoïdale pour transformer une tension alternative de forme sinusoïdale en une tension continue réglée, dans lequel est engendrée, par un redresseur (12), une tension continue sinusoïdale qui, avec son courant, charge une inductance (L_S) par un circuit électronique (T_Q), et l'inductance (L_S) est ensuite déchargée par l'intermédiaire d'une diode (D_1) sur un condensateur de sortie (C_L) et le commutateur électronique (T_Q) est commandé par un élément de commande (STc) qui met en fonction le commutateur électronique (T_Q) pendant une période de mise en fonction qui dépend de l'état de décharge de l'inductance (L_S), de la tension instantanée redressée sur le redresseur (12) et de la tension continue de sortie existant au condensateur de sortie (C_L), caractérisé en ce que l'élément de commande se compose d'un premier commutateur à valeur de seuil (STc), à l'entrée duquel est monté un condensateur (C12) dont le temps de passage à la tension de seuil d'hystérésis supérieure du premier commutateur à valeur de seuil (STc) correspond au temps de mise en fonction, et en ce qu'un point de liaison (22) entre l'inductance (L_S), la diode (D_1) et le commutateur électronique (T_Q) est raccordé par un organe RC (C10, R8) à l'entrée d'un deuxième commutateur à valeur de seuil (STa) qui, après un saut de tension se produisant pour une décharge totale de l'inductance (L_S), décharge le condensateur (C12) relié au premier commutateur à valeur de seuil (STc), le temps de déchargement du condensateur (C12) et donc le temps de mise en fonction du commutateur électronique (T_Q) étant défini par l'addition de plusieurs courants (i_{R12}, i_{R11}, i_{RS}) dont l'intensité est définie par une tension de référence (+U_{DD}), la valeur instantanée de la tension redressée (U_E) et la valeur instantanée de la tension continue de sortie (U_o).

2. Circuit de commande selon la revendication 1, caractérisé en ce qu'un autre commutateur à valeur de seuil (STb) est raccordé entre le deuxième et le premier commutateurs à valeur de seuil (STa, STc).

3. Circuit de commande selon l'une des revendications 1 ou 2, caractérisé en ce que le premier, le deuxième et le troisième commutateurs à valeur de seuil sont des déclencheurs de Schmitt (STc, STa, STb).

4. Circuit de commande selon l'une des revendications précédentes, caractérisé en ce que le deuxième commutateur à valeur de seuil (STa) est ponté par une résistance (R9) de sorte qu'il travaille comme générateur d'amorçage.

5. Circuit de commande selon la revendication 3, caractérisé en ce que le premier, le deuxième et le troisième commutateurs à valeur de seuil (STc, STa, STb) sont réalisés sous une forme de circuit intégré.

6. Circuit de commande selon l'une des revendications précédentes, caractérisé en ce qu'il est prévu un circuit de protection de surtension (D6, R6, R7) qui, lors du dépassement d'une valeur limite prédéterminée par la tension de sortie (U_Q), désactive le premier commutateur de valeur de seuil (STc) jusqu'à ce que la valeur de tension devienne à nouveau inférieure à la valeur limite.

7. Circuit de commande selon l'une des revendications précédentes, caractérisé en ce que le premier commutateur à valeur de seuil (STc) peut être rendu inactif par un signal externe.

8. Circuit de commande selon la revendication 6 ou 7, caractérisé en ce que le circuit de protection de surtension comporte une diode Zéner réglable (D6) et un diviseur de tension (R6, R7) dont le point central est relié par une diode (D9) à l'entrée du commutateur à valeur de seuil (STb).

9. Circuit de commande selon l'une des revendications précédentes caractérisé en ce qu'une résistance variable (R4) est montée, pour régler la tension de sortie (U_Q), entre le point de liaison de la diode (D_1) et du condensateur de sortie (C_L) et le condensateur (C_{12}).

10. Circuit de commande selon l'une des revendications précédentes, caractérisé en ce que la tension de sortie (U_Q) sur le condensateur (C_L) est détectée par une combinaison RC (R1, R2, C9) et amenée au circuit de commutation est amené afin d'agir sur le courant de charge du condensateur (C12).

11. Circuit de commande selon l'une des revendications précédentes, caractérisé en ce que l'inductance (L_S) et la diode (D_1) sont pontées par un condensateur (C_7).

12. Circuit de commande selon l'une des revendications précédentes caractérisé en ce que l'entrée du deuxième circuit à valeur de seuil (STa) est protégé par des diodes (D_7, D_8).

13. Circuit de commande selon l'une des revendications précédentes, caractérisé en ce que l'entrée du premier commutateur à valeur de seuil (STc) est protégé par une diode (D_10).

14. Circuit de commande selon la revendication 13, caractérisé en ce qu'un envoi en temps voulu du signal de réglage de la diode Zéner réglable (D_6) sur le condensateur (C12) est effectué à l'aide de diodes (D_11, D_12).

15. Circuit de commande selon la revendication 14, caractérisé en ce que la diode Zéner réglable

(D$_6$) est pontée par un condensateur (C13) pour réduire des oscillations parasites.

16. Circuit de commande selon l'une des revendications précédentes 13 à 15, caractérisé en ce qu'il est réalisé un démarrage du circuit à l'aide d'une résistance (R14) entre le condensateur (C7) et la diode (D$_{10}$).

17. Circuit de commande selon l'une des revendications précédentes 13 à 16, caractérisé en ce qu'une commande réglable externe peut être prévue par une diode (D$_{15}$) et une résistance (R15) en un point situé entre le condensateur (C12) et le premier commutateur à valeur de seuil (STc).

**Claims**

1. A control circuit for a switching power supply with sinusoidal current pick-up for converting a sinusoidal alternating voltage into a controlled direct voltage, a sinusoidal direct voltage being generated via a rectifier (12), which direct voltage loads an inductor (L$_S$) with its current via an electronic switch (T$_Q$), the inductor (L$_S$) then discharging into an output capacitor (C$_L$) via a diode (D$_1$), and the electronic switch (T$_Q$) being controlled by a control member (STc) which switches on the electronic switch (T$_Q$) for an on period which is dependent on the discharge state of the inductor (L$_S$), the momentary unidirectional voltage at the rectifier (12) and the output direct voltage at the output capacitor (C$_L$), characterized in that the control member comprises a first threshold switch (STc), to the input of which there is connected a capacitor (C12) whose recharge time to the upper hysteresis threshold voltage of the first threshold switch (STc) corresponds to the on period, and in that a connection point (22) between the inductor (L$_S$), diode (D1) and electronic switch (T$_Q$) is connected via an RC member (C10, R8) to the input of a second threshold switch (STa), which discharges the capacitor (C12) connected with the first threshold switch (STc) after a voltage leap occurring upon complete unloading of the inductor (L$_S$), the recharge time of the capacitor (C12) and thus the on period of the electronic switch (T$_Q$) is determined by summation of several currents (i$_{R12}$, i$_{R11}$, i$_{R5}$), the magnitude of which is determined by a reference voltage (+U$_{DD}$), the momentary value of the unidirectional voltage (U$_E$) and the momentary value of the output direct voltage (U$_o$).

2. A control circuit according to Claim 1, characterized in that a further threshold switch (STb) is connected between the second and first threshold switches (STa, STc).

3. A control circuit according to claim 1 or claim 2, characterized in that the first, second and third threshold switches are Schmitt triggers (STc, STa, STb).

4. A control circuit according to any one of the preceding claims, characterized in that the second threshold switch (STa) is bridged by a resistor (R9), such that it operates as a starting generator.

5. A control circuit according to claim 3, characterized in that the first, second and third threshold switches (STc, STa, STb) are constructed in the form of an integrated circuit.

6. A control circuit according to any one of the preceding claims, characterized in that an overvoltage safety circuit (D6, R6, R7) is provided, which deactivates the first threshold switch (STc) upon the exceeding of a predetermined boundary value by the output voltage (U$_o$) until said output voltage (U$_o$) is once again below the boundary value.

7. A control circuit according to any one of the preceding claims, characterized in that the first threshold switch (STc) can be de-activated by an external signal.

8. A control circuit according to claim 6 or claim 7, characterized in that the overvoltage safety circuit comprises a controllable Zenerdiode (D6) and a voltage divider (R6, R7), the central point of which is connected via a diode (D9) with the input of the threshold switch (STb).

9. A control circuit according to any one of the preceding claims, characterized in that a variable resistor (R4) for adjusting the output voltage (U$_o$) is connected between the connection point of the diode (D$_1$) and the output capacitor (C$_L$) of the capacitor (C$_{12}$).

10. A control circuit according to any one of the preceding claims, characterized in that the output voltage (U$_o$) is tapped off at the capacitor (C$_L$) via an RC combination (R1, R2, C9) and supplied to the control circuit to influence the charge current for the capacitor (C$_{12}$).

11. A control circuit according to any one of the preceding claims, characterized in that the inductor (L$_S$) and the diode (D$_1$) are bridged by a capacitor (C$_7$).

12. A control circuit according to any one of the preceding claims, characterized in that the input of the second threshold switch (STa) is protected by diodes (D$_7$, D$_8$).

13. A control circuit according to any one of the preceding claims, characterized in that the input of the first threshold switch (STc) is protected by a diode (D$_{10}$).

14. A control circuit according to claim 13, characterized in that a correctly timed input of the control signal of the controllable Zenerdiode (D$_6$) is effected at the capacitor (C$_{12}$) by diodes (D$_{11}$, D$_{12}$).

15. A control circuit according to claim 14, characterized in that to suppress undesired oscillations the controllable Zenerdiode (D$_6$) is bridged by a capacitor (C13).

16. A control circuit according to any one of preceding claims 13 to 15, characterized in that starting of the circuit is effected by a resistor (R14) between the capacitor (C7) and the diode (D$_{10}$).

17. A control circuit according to any one of preceding claims 13 to 16, characterized in that an external control mechanism may be provided via a diode (D$_{15}$) and a resistor (R15) at a point between the capacitor (C12) and the first threshold switch (STc).

# FIG.1

EP 0 256 231 B1

# FIG.2

EP 0 256 231 B1

# FIG.3a

# FIG.3b